Europäisches Patentamt

(19) European Patent Office

Office européen des brevets

(11) Publication number: **0 006 029**
**B1**

(12) **EUROPEAN PATENT SPECIFICATION**

(45) Date of publication of patent specification: **13.10.82**

(51) Int. Cl.³: **G 01 M 3/26**

(21) Application number: **79301043.0**

(22) Date of filing: **01.06.79**

(54) **Inflatable product testing method and apparatus.**

(30) Priority: **02.06.78 NZ 187465**
**30.03.79 US 25557**

(43) Date of publication of application:
**12.12.79 Bulletin 79/25**

(45) Publication of the grant of the patent:
**13.10.82 Bulletin 82/41**

(84) Designated Contracting States:
**AT BE CH DE FR GB IT LU NL SE**

(56) References cited:
**DE - A - 2 016 333**
**DE - U - 1 885 328**
**DE - U - 7 520 120**
**US - A - 2 696 732**
**US - A - 3 166 439**
**US - A - 3 315 519**
**US - A - 3 991 604**

(73) Proprietor: **BATAVIAN RUBBER COMPANY LIMITED**
**22-30 Birdwood Street**
**Featherston (NZ)**

(72) Inventor: **Nysse, Karel Jacobus**
**31 Wakefield Street**
**Featherston (NZ)**
Inventor: **Beentjes, Hermanus Johannes**
**87 Watt Street**
**Featherston (NZ)**
Inventor: **Mancer, Terrence Albert**
**30 Diamond Street**
**Carterton (NZ)**

(74) Representative: **Silverman, Warren et al,**
**HASELTINE LAKE & CO. Hazlitt House 28**
**Southampton Buildings Chancery Lane**
**London WC2A 1AT (GB)**

Courier Press, Leamington Spa, England.

Inflatable product testing method and apparatus

The present invention relates to method of and apparatus for testing for leakage flaws and weak spots of products capable of inflation such as surgical gloves.

It is well known that in any manufacturing process that in order to maintain a reputation for quality in the eyes of consumers that it is necessary to exercise stringent quality control. This is of particular importance when manufacturing inflatable products as the same require only a minute flaw in order for them to be defective. This is especially the case with surgical gloves because with any flaw that can lead to an aperture or opening no matter how small there is a very considerable risk of infection to the patient.

Currently it is standard to test the integrity of inflatable products and in particular surgical gloves in one of several ways. The most common method is the inflation of the product and the use of visual examination for pinholes and weaknesses. The difficulty with this technique however, which uses only a low inflation pressure e.g. 7 to 14 K Pa, is that even when for example a surgical glove is blown to a large size the fingers are not inflated and hence remain suspect for holes. Generally these are difficult to detect unless a great deal more time is spent by the tester, i.e. the tester waits for several minutes for the glove to deflate. The other difficulty that arises from the reliance upon visual examination of an inflated glove is that the tester must decide whether or not a weakness is passable or not. When this method is utilised it is often found that when quality is stressed the testers would rather play safe and destroy a glove on the detected weakness (e.g. by applying finger pressure thereto) rather than be reprimanded for the passing of sub-standard gloves thus leading to a high rate of spoilage while at the same time providing only marginal tests on the fingers. Other testing methods employ the use of liquids which even in the absence of pressure can provide a ready indication of a leakage. It is possible also to test using a liquid by applying an electric current to the liquid within the glove and detecting any current passage increase through the glove when the glove is in a second liquid. Such liquid using techniques however are slow and messy and preclude the use of a lubricant dust on the inside face of the gloves unless the same is to be applied afterwards thereby meaning that the testing of the glove occurs not only prior to packaging and sterilisation but also prior to dusting thereby reducing the reliability of the quality control.

United States Patent Specification No. 3315519 to W. C. Ferguson discloses a method of testing surgical gloves which utilises gas pressurisation while the glove is confined or constrained thereby enabling pressures to be employed which would otherwise cause rupture of the gloves and yet at the same time ensure that the fingers are inflated. When the selected maximum gas pressure has been attained, the change in pressure, if any, within the glove over a predetermined period of time is determined as an indication of pressure losses through flaws and weak spots in the gloves which if found to be present lead to rejection of the gloves. However, anomalous results are liable to occur as a result of stress relaxation which occurs when a rubber sample is stretched to a given elongation; the stresses then set up gradually decrease with time and result in pressure losses additionally to those due to air loss at flaws and weak spots. Equally, when a sample is subjected to constant stress, the rubber continues to deform over a period of time, with the most rapid deformation occurring at the onset of stress and continuing approximately linearly with the logarithm of time. This property is known as "creep" and the amount thereof varies considerably depending on the various rubber formulations and degree of humidity at the time of testing and is also responsible for additional pressure loss and introduces anomalies into test results achieved when utilising the apparatus disclosed in United States Patent Specification No. 3315519 in the manner described herein. The apparatus described in United States Patent Specification No. 3315519 moreover contains no provision for compensating for such anomalous results. Electrical circuit means associated therewith is only able to generate signals if an inflation pressure is not attained over a predetermined period of time and to generate signals if such pressure, when attained, is not maintained over a predetermined time period.

By way of information only, other testing methods used by manufacturers vary from batch testing to visual checking of deflated gloves over strong light. These techniques however do not provide a high degree of accuracy and hence in the art of manufacture of inflatable products such as balloons, gloves etc. there is a belief that a high degree of accuracy during other than batch tests is obtainable without introducing prolonged testing procedures.

Notwithstanding the aforementioned disadvantages thereof, the gas pressurization method as well typified by United States Patent Specification No. 3315519 represents a working technique which can be efficiently carried out commercially. It is accordingly an object of the present invention to provide a gas pressurization method for the testing for leakage flaws and weak spots of products capable of inflation which avoids anomalous results due to the phenomena of stress relaxation and creep.

Accordingly, in one aspect, the present invention consists in a method of testing a product capable of being inflated such as a surgical glove against leakage flaws and substantially weak spots which comprises the steps of:

(a) mounting the product in such a way that the same can be inflated at least partially through an intended opening thereof by applying a gas pressure thereinto,

(b) rigidly constraining the product against substantial inflation with constraints which in use do not substantially inhibit leakage of gas through leakage flaws and leakage flaws resulting from the breakage of substantially weak spots of said product,

(c) applying a gas pressure to said product so as to attain a pressure within said product, which pressure is a pressure that in the absence of said constraints would be destructive of said product,

(d) detecting any gas pressure decrease within said product over a testing period commencing upon its attaining said pressure,

(e) rejecting said product as being defective owing to the leakage flaws if said product either fails to achieve said pressure or loses pressure unacceptably over said testing period,

characterised in that there is carried out the additional step of:

(f) reducing the pressure within said product upon its attaining said pressure to a second pressure which itself is a pressure which, in the absence of said constraints, would be destructive of said product, the magnitude of the difference between said pressures being such as, at least, to compensate for the effect on the pressure within said product during the testing period of stress relaxation of the material from which said product is made and change in properties due to creep, so that after effecting the pressure reduction, any further reduction in pressure during the testing period which then ensues will take place at a uniform rate and be indicative of gas leakage at flaws or substantially weak spots in said material.

In a further aspect, the invention consists in apparatus for testing a product capable of being inflated such as a surgical glove which has a single intended opening thereto, said apparatus comprising:

means for sealably mounting said product adjacent and about said single intended opening thereof and capable of allowing the ingress of gas under pressure into and egress of gas from said product,

means operable to rigidly constrain said product against substantial inflation in inflatable regions thereof when mounted on the mounting means,

means capable in use of applying gas to a predetermined pressure via the mounting means to a constrained and mounted product,

means capable of detecting the internal gas pressure of the product mounted on the mounting means,

circuit means operatively connected to the means to apply said gas pressure and which is capable of generating signals to an operator that a product should be rejected if said pressure is not attained within some predetermined period of time and which is capable of generating a signal if said pressure when attained is not substantially maintained for a predetermined testing period,

characterised in that circuit means operatively connected to the means to apply a predetermined gas pressure to a constrained and mounted product is capable of reducing the pressure within the product from said pressure if that pressure is attained to a second pressure by adjustment means by an amount which is presettable so as to compensate for the effect on the pressure within said product of stress relaxation of the material from which said product is made and change in properties due to creep to an extent selectable in accordance with the material from which the product is made, and thereafter is capable of generating a signal if the reduced second pressure is not substantially maintained for a predetermined testing period, and in that the internal gas pressure within said product is detected by means in communication with the interior of the product.

The method and apparatus of the present invention find particular use in the testing of surgical gloves which have a single intended opening thereinto.

Preferably the first pressure is about 48 to 55 K Pa, preferably about 48 K Pa, with the second pressure being about 7 K Pa lower than the first pressure, that is being about 41 K Pa in the preferred case. Irrespective of what the first and second pressures are, preferably the second pressure is about 7 K Pa below said first pressure.

Preferably the testing period is in the range of from 1 to 60 seconds and is ideally within the range of from about 1 second to about 8 seconds.

Preferably a partial inflation of the product with a low pressure occurs prior to the constraining surfaces being applied thereto, and prior to the product being taken to said first pressure.

The preferred form of the present invention will now be described with reference to the accompanying drawings in which:

Figure 1 is a sectionalised view of the mounting means in accordance with the present invention showing the mounting means thereof, and the annular surface over which the cuff regions of a glove overlies during the testing mode;

Figure 2 shows a view A—A of the arrangement as shown in figure 1;

Figures 3a to 3d show diagrammatically the mode of operation of the preferred constraints etc. and the mounting member with respect to the surgical glove with which it is engaged;

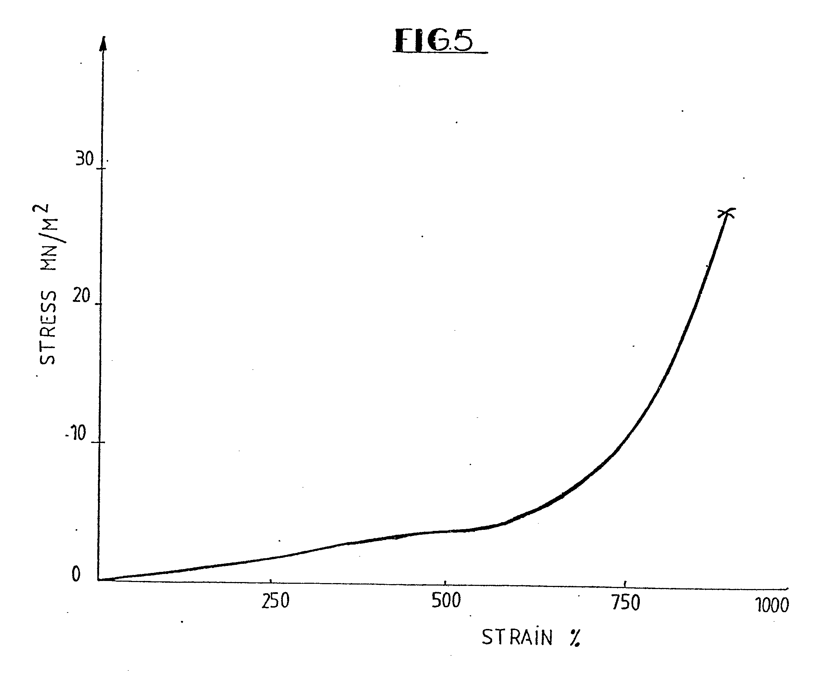

Figure 4 shows a view B—B of a constraining platen as illustrated in figure 3a showing the porous surface thereof; and

Figure 5 is a graph of stress against strain for a typical latex rubber from which an inflatable product such as surgical gloves is formed,

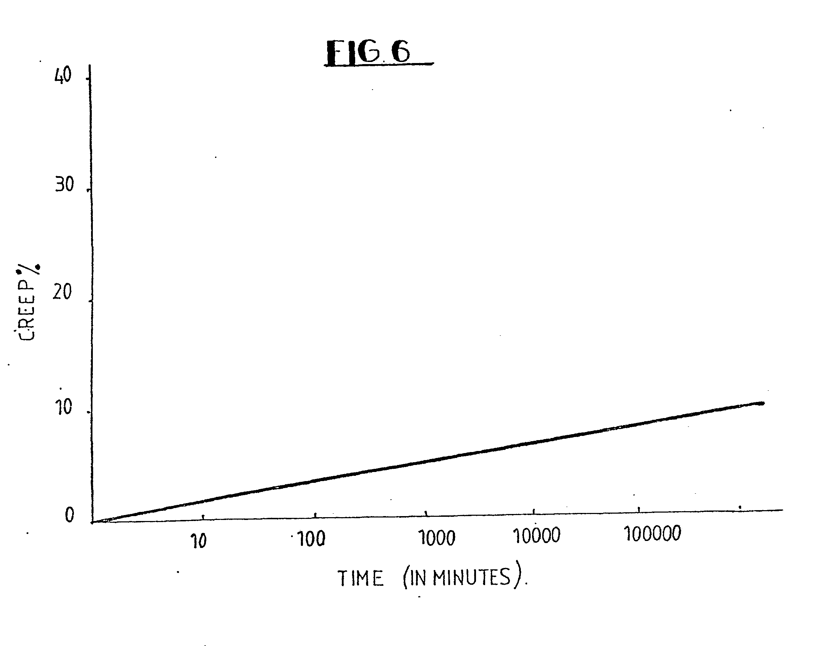

Figure 6 is a graph of creep against time showing the exponential relationship between creep and time for a typical latex rubber, i.e. the stress relaxation and creep varies approximately linearly with the logarithm of time under load,

Figure 7 is a diagrammatic layout showing in solid outline pneumatic circuits and in dotted outline electrical circuits used to effect the testing method in accordance with the present invention,

Figure 8 is a graph of pressure against time for a surgical glove under inflation and under constraint such as that required by the present invention, the graph showing how with time relaxation of the latex after the product has been taken to said first pressure (P1) the pressure falls rapidly and continues to fall but with a decreasing rapidity as time goes on,

Figure 9 is a similar graph to that of figure 8 in that it is for the same glove but shows how it is possible at least for finite times necessary for the testing method of the present invention to take a surgical glove to P1, drop the same rapidly to P2 whereupon during the test period there is not the initial rapid decrease that occurs as in figure 8,

Figure 10 is a front view of the apparatus in accordance with the present invention showing how the same can be combined in an aesthetic and compact cabinet, and

Figure 11 is a view C—C of the cabinet shown in figure 10.

The preferred form of the present invention is applicable to surgical gloves which persons skilled in that art will appreciate must as far as possible provide a non-porous yet extremely thin and flexible hand covering membrane. Persons skilled in the art will appreciate that if a supply of air or other gas at even 7 or 14 K Pa is applied through the sealed cuff region of the glove that the glove will expand to destruction as the tensile strength of the material from which they are customarily made is not sufficient to hole the same against such continued inflation. Hence the normal testing of surgical gloves cannot normally be effected under pressures which would allow a substantial amount of leakage through the normally uninflated regions of a surgical glove. Hence while inflation techniques might well be adequate for testing palm regions and the like of surgical glove, pressure limitations do not allow sufficient testing of certain regions thereof.

In accordance with the present invention it will be seen that a higher than normal pressure is applied (i.e. is attained within the product if not defective) although this is not necessarily the case as the testing would be effective with conventional pressures although since the method and apparatus allows for higher pressures which give greater accuracy the higher pressure should preferably be used.

In the preferred form of the present invention gloves in a condition ready for packaging would be moved to a testing station as a first step and at the completion of a previous dusting step if any. The glove would be taken and the cuff region 1 thereof would be moved to overlie the annular surface 2 which includes a flexible O-ring or the equivalent 3 of a substantially disc like mounting member 3A. The mounting member 3A when the cuff region 1 of the surgical glove overlies the same has ports 4 which allow fluid communication with the interior of the glove.

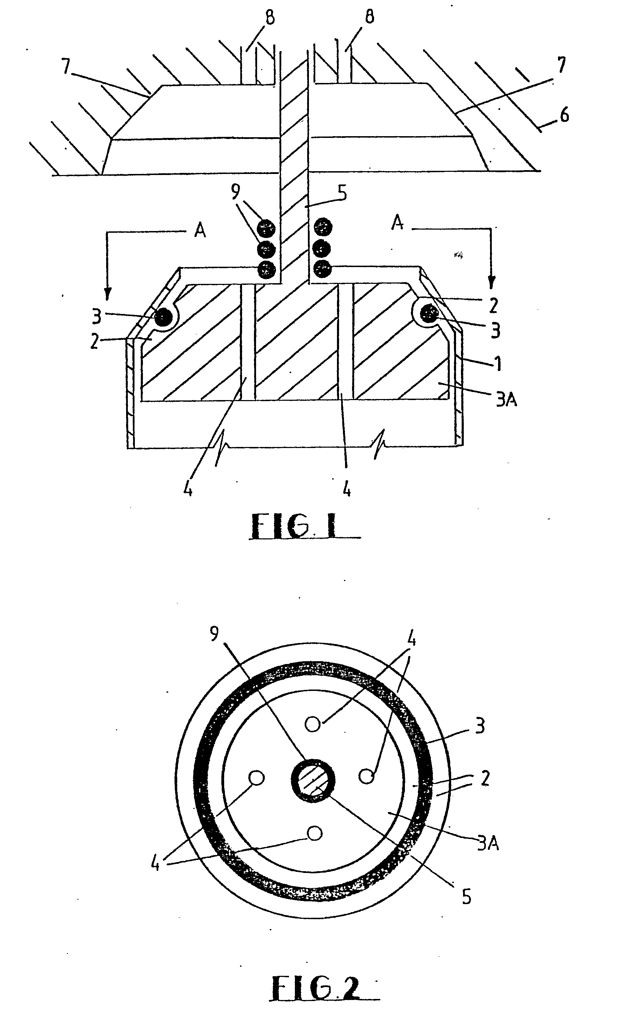

The mounting disc 3A is connected to a member 5 which is slidable relative to means 6 which includes an annular surface 7 capable upon upward movement of the shaft 5 and the disc 3A as shown in figure 1 of pressing in a complementary manner on the overlying cuff regions 1 of the surgical glove to thereby provide a sealed mounting of the glove. The upward movement in use of the disc 3A and the shaft 5 would be preferably under the action of a pneumatic ram. Gas ingress inside of the glove would be by way of at least one port 8 in said means 6 and testing of the pressure within the product would preferably be by way of means in communication with the sealed chamber which is defined between said means 6, cuff region 1 and said disc 3A and shaft 5 when the same is moved upwards into its sealing condition. In order to minimise any risk of leakage of gas (preferably air) out of the seals on the shaft 5 a plurality of flexible O-rings 9 are preferably provided on the shaft 5 which deform without interfering with the seal formed between the annular surfaces 2 and 7 in order to prevent leakage to the chamber from any pneumatics or the atmosphere.

Where gloves with a bead on the cuff are being tested a simple annular groove is sufficient.

The view A—A shown in figure 1 shows the overlaying regions of the glove 1.

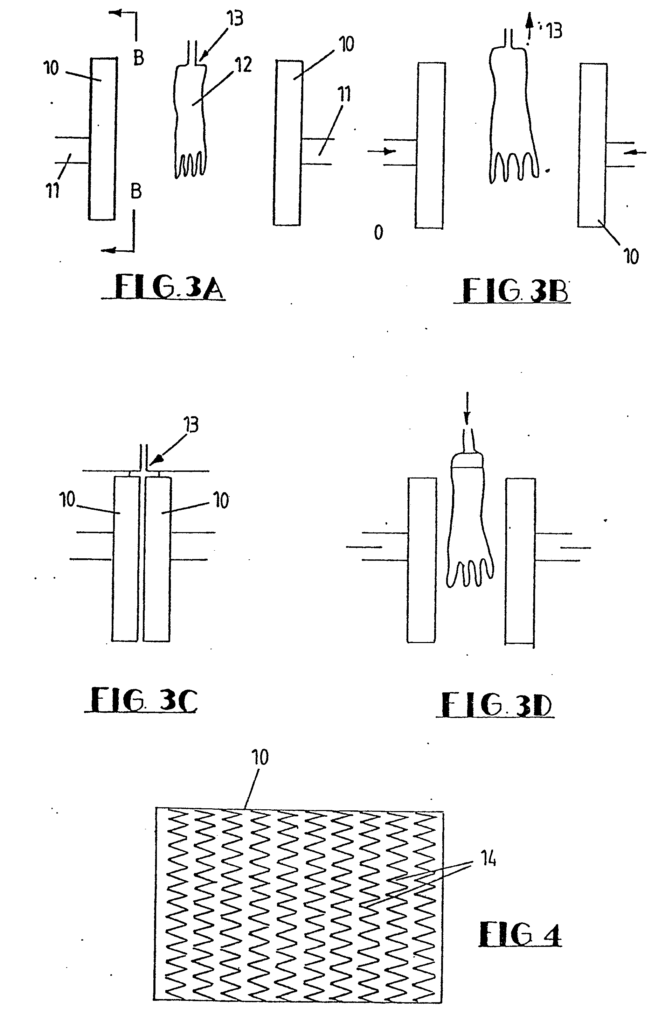

Figures 3a to 3d show the normal mode of operation of the apparatus. In the preferred form there are two platens 10 each mounted on a ram 11 capable of moving the same inwardly or outwardly with respect to a surgical glove 12 which is mounted on the mounting disc as shown in figure 1. This mounting arrangement is shown diagrammatically in figure 3 to 3d and given reference numeral 13.

Consider figure 3a as being the state of a surgical glove that overlies the mounting disc 3A and the annular surface 2 prior to the same being sealed thereonto. The apparatus is then actuated and the means 13 moved upwardly as shown in figure 3b in order to provide the seal against the annular surface 7 shown in figure 3. At the same time after initial inflation to prevent overlying fingers or shortly thereafter the platens 10 move inwardly so as to constrain the glove as shown in figure 3c. Obviously the surface of the platens 10 must be both flexible or formed to the constraining shape and also porous in order to allow leakages to occur to thereby provide the data necessary for rejection or passing of a glove being tested. Preferably this porous surface is achieved using a plurality of coil springs 14 which overlie a reasonably thick substrate of for example open-cell foam rubber. In other forms a porous matrix or even a metal or the like mesh could be used — however the springs are the most preferred form. Ideally the mounting means 13 is positioned at a position after the sealing thereof so that in conjunction with the platens 10 no unconstrained region of the glove occurs which would result in this same being destructively inflated under the preferred pressures of 48 to 55 K Pa.

Once the condition of the apparatus as shown in figure 3c has been reached the first pressure (P1) is applied e.g. 48 K Pa and as soon as that pressure has been attained a rapid reduction to P2 (preferably 41 K Pa) occurs and a sensor linked for example to a port 8 detects any further drop in pressure. These drops in pressure are automatically analysed preferably by an electronic device which over a time period determines whether or not a decrease if any is sufficient to indicate a leakage which should result in rejection. Ideally the electronic circuit would be such that upon the testing pressure being reached a signal would be given or would not be given, for example, by a light. If that signal does not or does, as the case may be, come up then obviously the hole in the glove is of such a size that the pressure P1 cannot be reached and hence rejection signal should occur. Once P1 and then the reduced testing pressure P2 is attained the apparatus automatically monitors pressure over a predetermined period ranging for example from one minute to a fraction of a second. If a rate or degree of pressure decreases from P2, if any, less than that determined to be indicative of a glove worthy of rejection, is sensed over the predetermined period (for example, one second or alternatively 100ths of a second or for example three seconds) a signal is preferably given to pass the glove. Alternatively preferably a signal is given to reject the glove. These signals are preferably in the form of lights or buzzers.

Subsequent to a signal being given which is indicative of rejection or passing of a particular inflated product means is operator actuated or automatically actuated to move the platens apart and the mounting member 13 downwards as shown in figure 3d. Obviously the platen should move apart slightly before any downward movement of the mounting disc should occur. Conversely with the situation as shown in figure 3b i.e. the upward movement should have ceased by the time first contact is made between platens 10 and the glove.

As previously stated it is desirable that some pressure or gas quantity be applied internally of the glove 12 prior to the constraining thereof occurring. This is in order to separate the fingers of the glove to ensure that there is no overlying section thereof. Ideally the glove when being tested should be positioned in such a way that the palm and back of hand regions will when constrained lie against the platen surfaces, i.e. the springs 14, so as to minimise the risk of overlying fingers or the like providing a seal over a hole that should be picked up by the apparatus.

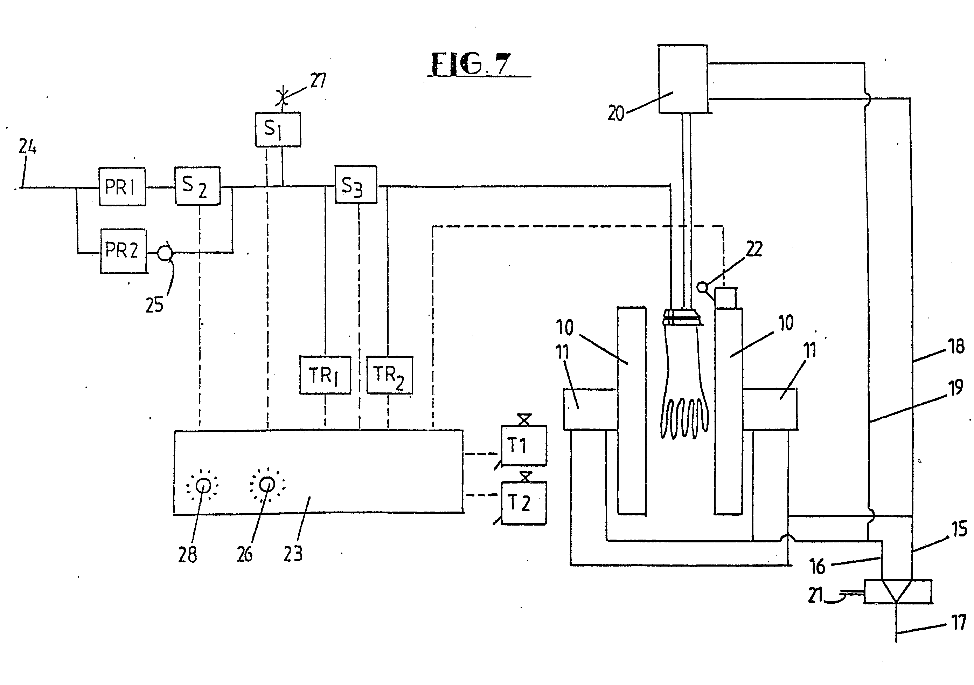

Referring now to figure 7 the preferred pneumatic and electronic layouts will be described. In the layout the following symbols are used:

S = Solenoid
PR1 = Pressure regulator set at 48 K Pa
PR2 = Pressure regulator set at 7 K Pa
TR1 = Transducer
TR2 = Transducer
T1 = an adjustable timer
T2 = an adjustable timer.

Referring to figure 7 therefor it can be seen that the platens 10 are capable of being moved towards or away from each other under the action of pneumatic rams 11 as previously described under the action of the air lines 15 for closure and 16 for opening. The source of the gas to the pneumatic lines 15 and 16 is a mains airline 17 of preferably 480 to 700 K Pa.

As previously described a pneumatic movement is necessary in order to close the mounting and in this regard lines 18 and 19 are linked to lines 15 and 16 directly or indirectly so that upon the initiation of the pneumatic pressure the rams 11 of the platens 10 and the ram 20 of the mount are actuated so as to take the mounted glove to its testing condition. The initiation of this sequence of events occurs under the action of the start button 21. It can be seen therefore that with appropriately dimensioned rams the simple actuation of the button or other means e.g. foot pedal 21 will cause a pressurisation of pneumatic rams 11 and 20 so that first the mount is raised to its closed condition which it achieves prior to the platens 10 coming into their constraining condition. As the platens approach however a micro switch or limit switch 22 is actuated in order to commence the logic circuits which are partially pneumatic and partially electronic.

In figure 7 the electrical circuits to the console 23 are shown in dotted outline. The mode of operation of the circuit upon initiation at the signal of the switch 22 will now be described.

A similar mains pressure to that in line 17 is fed to line 24 where the same has the option of passing through the pressure regulator PR1 which is set at 48 K Pa and pressure regulator PR2 which is set at 7 K Pa. In the line from pressure regulator PR2 there is a one way valve 25 so as to cut off all possibilities of there being a feed back from the pneumatic circuit (shown in solid lines) to pressure regulator PR2.

At the commencement of a testing cycle air at 7 K Pa passes to the glove as solenoid S2 is closed, S1 is closed and S3 is open. This achieves the partial inflation of the glove even as the glove is being mounted on the mount and prior to the initiation of the whole sequence by the use of button 21. Upon button 21 being actuated the required constraint and air tight mounting of the glove about its cuff regions occurs whereupon limit switch 22 actuation causes the opening of S2 to allow air at 48 K Pa to flow to the glove. Timer T1 also is initiated. At the end of the preselected period of timer T1 transducer TR2 output is sampled. If TR2 indicates the pressure is less than 48 K Pa a fail light 26 is energised. If the pressure is 48 K Pa solenoid S1 is opened and S2 is closed and the glove pressure is thus reduced to 41 K Pa through the bleed valve 27 which is set at 41 K Pa. With some forms of the invention however it may not be necessary for solenoid S2 to be closed. The next sequence occurs when a pressure of K Pa is reached whereupon transducer TR1 or TR2 initiates timer T2 and closes solenoid S3. Preferably transducer TR2 is used for this purpose. At the end of the period set by timer T2 (the period preferably being adjustable within the limits previously mentioned) the differential pressure across solenoid S3 i.e. between transducers TR1 and TR2 is sampled and if the differential pressure is greater than 0 K Pa the fail light 26 or a different fail light is energised or otherwise a pass light 28 is initiated.

Upon either light 26 or 28 being energised the switching associated with button 21 allows the platens 10 to be separated and the mount of the glove to release its air tight seal and in so doing allows the deactivation of the limit switch 22 which in turn closes solenoid S2 and S1. At the same time S3 is opened so that pressure at 7 K Pa is passed through for the commencement of a further cycle.

In the preferred form of the present invention a feed back (not shown) between the control unit which includes the lights 26 and 28 occurs so that upon a signal to pass or fail a particular inflatable product occurring the automatic ending of the test occurs with the consequent setting of the apparatus for a subsequent test.

Persons skilled in the art will appreciate viable alternatives to the system just disclosed as being by way of example.

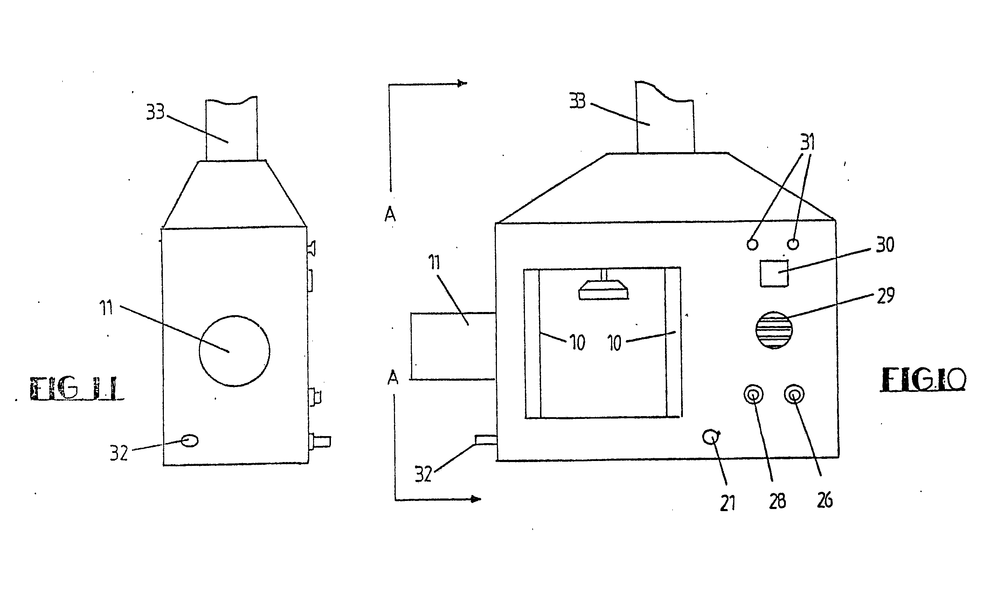

Figures 10 and 11 show how the circuit layout of figure 7 can be compacted into a console. In that console there can be seen the platens 10 and one of the pneumatic ram units 11 therefore. Also seen is for example, the start button 21, the pass and fail lights 28 and 26, an optional audible alarm 29 which can be used to show either a pass or fail, a pressure meter 30 which can give information concerning the main lines pressure or pressure at any stage throughout the system as a check and controls 31 which can be used to close off if desired the otherwise continuous 7 K Pa gas flow.

Also shown in figure 10 and for that matter figure 11 is the combined conduit 32 which takes the air of lines 24 and 17 into the cabinet. The cabinet also has an exhaust conduit 33 which is capable of extracting any dust generated within the cabinet shown in figure 10 e.g. loose lubricant dust from the gloves.

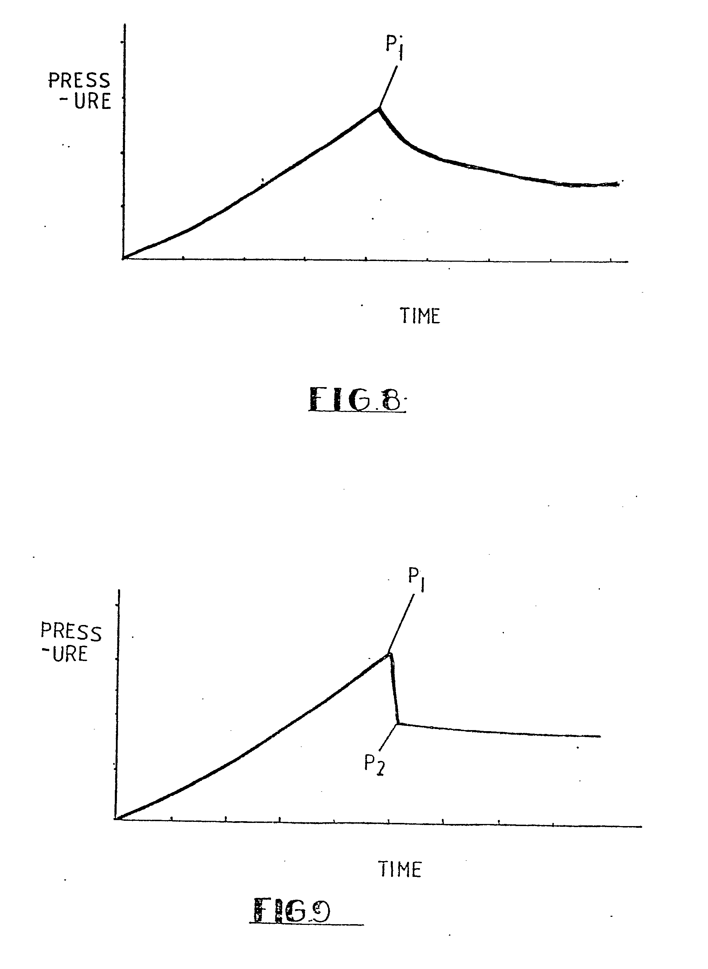

From the foregoing therefore it can be seen that a simple arrangement has been devised to ensure that difficulties of relaxation of the latex rubber or different properties owing to creep are overcome by allowing the timing to occur upon the attainment of P2 as shown in figure 9 and not at some stage that results naturally upon the attaining of pressure P1 which can lead to anomalous results owing to the relaxation as demonstrated in figure 8. Therefore by adopting the control circuitry etc., of the present invention the anomalous results that would arise from the use of the apparatus of U.S. Patent Specification No. 919,562 would not occur.

From the foregoing it can be seen that the present invention provides a novel method of testing and a novel apparatus applicable thereto. Such an apparatus it can be seen provides fast and accurate means of testing gloves while at the same time allowing the tests to be conducted virtually automatically by largely unskilled labour. Spoilage rates may be reduced owing to the abovementioned human tendencies being avoided by the improved testing technique as the testing device will rupture and reject substantial weaknesses previously left to the individual operator freeing the said operators from making this important and difficult decision.

In the case where there are gloves with dust inside for lubrication purposes preferably the test is conducted in a semi-enclosed space which is vented to as to exhaust dust therefrom.

From the foregoing then it can be seen that the present invention provides a novel means and method which should fine widespread acceptance.

**Claims**

1. A method of testing a product capable of being inflated such as a surgical glove against leakage flaws and substantially weak spots which comprises the steps of:

(a) mounting the product in such a way that the same can be inflated at least partially through an intended opening thereof by applying a gas pressure thereinto,

(b) rigidly constraining the product against substantial inflation with constraints which in use do not substantially inhibit leakage of gas through leakage flaws and leakage flaws resulting from the breakage of substantially weak spots of said product,

(c) applying a gas pressure to said product so as to attain a pressure within said product, which pressure is a pressure that in the absence of said constraints would be destructive of said product,

(d) detecting any gas pressure decrease within said product over a testing period commencing upon its attaining said pressure,

(e) rejecting said product as being defective owing to the leakage flaws if said product either fails to achieve said pressure or loses pressure unacceptably over said testing period,

characterised in that there is carried out the additional step of:

(f) reducing the pressure within said product upon its attaining said pressure to a second pressure which itself is a pressure which, in the absence of said constraints, would be destructive of said product, the magnitude of the difference between said pressures being such as at least to compensate for the effect on the pressure within said product during the testing period of stress relaxation of the material from which said product is made and changing properties due to creep, so that after effecting the pressure reduction, any further reduction of pressure during the testing period which then ensues will take place at a uniform rate and be indicative of gas leakage at flaws or substantially weak spots in said material.

2. A method as claimed in claim 1 wherein some gas is applied to the product prior to the rigid constraining thereof.

3. A method as claimed in claim 1 or claim 2, wherein the gas pressure which is reduced to said second pressure is from about 48 to 55 K Pa.

4. A method as claimed in any one of the preceding claims, wherein said second pressure is about 1 K Pa below the first pressure to which the product is inflated when under constraint.

5. A method as claimed in any one of the preceding claims wherein said testing period is within the range of from one second to 60 seconds.

6. A method as claimed in claim 5 wherein said testing period is selected within the range of from about 1 second to about 8 seconds.

7. A method as claimed in any one of the preceding claims which is applied to the testing of a surgical glove against leakage flaws wherein said glove is mounted by mounting the cuff region of the glove over a member having a substantially annular face and having an annular O-groove into which beaded gloves may be fitted capable of being moved relative to another substantially annular face which applies in use pressure on the beaded cuff region of said glove pulled thereover.

8. A method as claimed in claim 7 wherein at least one of the substantially annular surfaces includes an O-ring mounted symmetrically thereon for the mounting of unbeaded gloves.

9. A method as claimed in any one of the preceding claims which is applied to the testing of a surgical glove against leakage, wherein said glove is rigidly constrained by causing a machine to move two complementary constraining surfaces against the inflatable regions of the mounted glove after partial inflation of said glove with low pressure, the constraining surfaces each being disposed with respect to a mounted glove so as to constrain one side region of every finger including the thumb of the mounted glove.

10. A method as claimed in any one of the preceding claims which is applied to the testing of a surgical glove against leakage, wherein all of the steps are performed on a machine which after the mounting of said glove and the commencement of gas pressurisation operates automatically and automatically signals whether or not a given glove should be rejected or passed.

11. Apparatus for testing a product capable of being inflated such as a surgical glove which has a single intended opening thereto, said apparatus comprising:

means for sealably mounting said product adjacent and about said single intended opening thereof and capable of allowing the ingress of gas under pressure into and egress of gas from said product,

means operable to rigidly constrain said product against substantial inflation in inflatable regions thereof when mounted on the mounting means,

means capable in use of applying gas to a predetermined pressure via the mounting means to a constrained and mounted product,

means capable of detecting the internal gas pressure of the product mounted on the mounting means,

circuit means operatively connected to the means to apply said gas pressure and which is capable of generating signals to an operator that a product should be rejected if said pressure is not attained within some predetermined period of time and which is capable of generating a signal if said pressure when attained is not substantially maintained for a predetermined testing period,

characterised in that circuit means (S1) operatively connected to the means (PR1) to apply a predetermined gas pressure to a constrained and mounted product is capable of reducing the pressure within the product from said pressure if that pressure is attained to a second pressure by means (27) by an amount which is presettable so as to compensate for the effect on the pressure within said product of stress relaxation of the material from which said product is made and change in properties due to creep, and thereafter is capable of generating a signal is the reduced second pressure is not substantially maintained for a predetermined testing period, and in that the internal gas pressure within said product is detected by means (TR2) in communication with the interior of the product.

12. Apparatus as claimed in claim 11, wherein said circuit means includes means (T2) whereby said predetermined testing period can be varied.

13. Apparatus as claimed in claim 11 or 12, wherein said means operable to rigidly constrained said product against substantial inflation comprises two platens (10) movable to encase the product being tested over inflatable regions thereof.

14. Apparatus as claimed in claim 13, wherein each said platen (10) has a porous surface thereof defined by a plurality of substantially rigid coil springs (14) which lie with their longitudinal axes substantially in the surface of the substrate of the platen and which are constrained from deforming from their longitudinal axes.

15. Apparatus as claimed in any one of claims 11 to 14, wherein said mounting means comprises a mounting member (3A) which has a substantially annular surface (2) over which regions about said single intended opening of the product can be overlaid and means (6) capable of coacting with said substantially annular surface in order to sealably squeeze the overlaid regions of said product to thereby provide the sealable mounting of said product adjacent and about its single intended opening, there being provided ·at least one port (4) through said mounting member capable of allowing the ingress of gas under pressure into the said product and which forms part of said means in communication with the interior of a product mounted on the mounting means capable of detecting the pressure thereof.

16. Apparatus as claimed in any one of claims 11 to 15, wherein said means (10) operable to rigidly constrain said product and said means (1, 3A, 6) for sealably mounting said product are mounted in a substantially enclosed space, which said substantially enclosed space has associated therewith means (33) to exhaust air and any dust entrained therein therefrom.

17. Apparatus as claimed in any one of claims 11 to 16, which additionally comprises circuit means (TR2, S1) which upon said pressure being achieved automatically in conjunction with said means (S1, 27) to allow the egress of air from the interior of a product causes the reduction of the pressure within said product to said second pressure, and circuit means (TR1 and TR2) in communication with the interior of the product capable of detecting the pressure thereof which upon said second pressure being achieved signals whether said second pressure is maintained for a predetermined period of time.

18. Apparatus as claimed in claim 17, wherein said last mentioned circuit means (TR1 and TR2) signals upon said product not falling to an internal gas pressure that is slightly below said second pressure.

19. Apparatus as claimed in claim 17 or 18, which comprises means (T2) to allow an operator to select the period of time over which said second pressure must be maintained before a non-rejection signal is given.

20. Apparatus as claimed in any one of claims 11 to 19 wherein means (PR2) is provided to apply some gas to the interior of a product prior to said means (10) operating to rigidly constrain said product against substantial inflation.

**Revendications**

1. Procédé pour vérifier un produit pouvant être gonflé, comme par exemple un gant chirurgical, pour déceler des défauts générateurs de fuites ainsi que les points sensiblement faibles, ce procédé comprenant les phases consistant:

(a) à monter le produit de manière telle qu'il puisse être gonflé au moins partiellement à travers une ouverture qu'il comporte à cette fin par application de la pression d'un gaz dans ledit produit,

(b) à contraindre de façon rigide le produit pour qu'il ne gonfle pas notablement à l'aide de contraintes qui, dans l'utilisation, ne contre carrent pas sensiblement la fuite du gaz à travers les défauts générateurs de fuites ainsi qu'à travers les défauts générateurs de fuites résultant de la rupture des points sensiblement faibles dudit produit,

(c) à appliquer la pression d'un gaz du produit de manière qua la pression soit atteinte à l'intérieur dudit produit, cette pression étant une pression qui en l'absence desdites contraintes détruirait ledit produit,

(b) à détecter toute diminution de pression de gaz à l'intérieur dudit produit pendant une période de vérification commençant lorsque ladite pression est atteinte,

(e) à rejeter ledit produit comme étant défectueux par suite des défaut générateurs de fuites si ladite pression n'est pas atteinte à l'intérieur dudit produit ou si la pression diminue de façon inacceptable pendant ladite période de vérification,

caractérisé par le fait qu'il comprend la phase supplémentaire consistant:

(f) à réduire la pression à l'intérieur dudit produit, lorsque ladite pression est atteinte, jusqu'à une seconde pression, laquelle est elle-même une pression qui, en l'absence desdites contraintes, détruirait ledit produit, la valeur de la différence entre lesdites pressions étant telle qu'elle compense au moins, pendant la période d'essai l'effet sur la pression régnant à l'intérieur dudit produit du relâchement des tensions dans la matière dont est constitué ledit produit ainsi que les effets de la variation des propriétés due au fluage de telle sorte que lorsque la réduction de pression est effectuée, toute autre réduction de pression qui s'ensuit pendant la période de vérification a lieu à une allure uniforme et indique une fuite de gaz aux défauts ou aux points sensiblement faibles de ladite matière.

2. Procédé suivant la revendication 1, dans lequel du gaz est appliqué au produit avant sa mise sous contrainte rigide.

3. Procédé suivant les revendication 1 ou 2, dans lequel la pression du gaz qui est réduite jusqu'à ladite seconde pression est comprise entre 48 et 55 K Pa.

4. Procédé suivant l'une quelconque des revendications précédentes, dans lequel ladite seconde pression est d'environ 1 K Pa inférieure à la première pression à laquelle le produit est gonflé quand il est sous contrainte.

5. Procédé suivant l'une quelconque des revendications précédentes, dans lequel ladite période de vérification est comprise entre 1 seconde et 60 secondes.

6. Procédé suivant la revendication 5, dans lequel ladite période de vérification est choisie de manière à être comprise entre environ 1 seconde et environ 8 secondes.

7. Procédé suivant l'une quelconque des revendications précédentes, ce procédé étant appliqué à la vérification d'un gant chirurgical pour déceler les défauts générateurs de fuite, dans lequel on monte ledit gant en disposant la région de poignet du gant sur un élément comportant une face sensiblement annulaire et une gorge annulaire de section circulaire dans laquelle on peut monter des gants comportant un bourrelet et pouvant être déplacé par rapport à une autre face sensiblement annulaire qui applique pendant l'utilisation une pression sur la région de poignet à bourrelets dudit gant enfilé sur ledit élément.

8. Procédé suivant la revendication 7, dans lequel au moins une des surfaces sensiblement annulaires comprend une bague torique qui y est montée symétriquement en vue du montage des gants sans bourrelet.

9. Procédé suivant l'une quelconque des revendications précédentes, ce procédé étant appliqué à la vérification d'un gant chirurgical pour en déceler les fuites, dans lequel ledit gant est soumis à contrainte de façon rigide en amenant une machine à déplacer deux surfaces d'application de contrainte complémentaires contre les régions gonflables du gant monté, après un gonflage partiel dudit gant avec une pression faible, les surfaces d'application de contrainte étant disposées chacune, par rapport à un gant monté, de manière à appliquer une contrainte sur une des régions latérales de chaque doigt comprenant le pouce du gant monté.

10. Procédé suivant l'une quelconque des revendications précédentes, ce procédé étant appliqué à la vérification d'un gant chirurgical pour en déceler les fuites, dans lequel toutes les phases sont effectuées sur une machine qui, après le montage dudit gant et le début de l'application d'un gaz, fonctionne automatiquement et signale automatiquement si oui ou non un gant donné doit être rejeté ou admis.

11. Appareil pour vérifier un produit pouvant être gonflé, comme par exemple un gant chirurgical, qui comporte une seule ouverture prévue à cet effet, ledit appareil comprenant:

un moyen pour le montage de façon étanche dudit produit en un point adjacent et aux environs de son ouverture unique et pouvant permettre l'entrée d'un gaz sous pression dans ledit produit et la sortie du gaz depuis ledit produit,

un moyen pouvant fonctionner de manière à appliquer de façon rigide une contrainte du produit en empêchant un gonflage notable des régions gonflables de celui-ci quand il est monté sur le moyen de montage,

un moyen pouvant, pendant l'utilisation, appliquer un gaz à une pression prédéterminée par l'intermédiaire du moyen de montage à un produit soumis à une contrainte et monté, et

un moyen capable de détecter la pression interne du gaz du produit monté sur le moyen de montage, un circuit relié fonctionnellement au moyen destiné à appliquer ladite pression de gaz, ce circuit pouvant engendrer des signaux avertissant un opérateur qu'un produit doit être rejeté si ladite pression n'est pas atteinte pendant ladite période de temps prédéterminée et qui peut engendrer un signal si ladite pression, lorsqu'elle est atteinte, ne se maintient pas sensiblement pendant une période de vérification prédéterminée,

caractérisé par le fait que le circuit (S1) relié fonctionnellement au moyen (PR1) destiné à appliquer une pression de gaz prédéterminée à un produit soumis à une contrainte et monté peut réduire la pression à l'intérieur du produit depuis ladite pression, si cette pression est atteinte, jusqu'à une seconde pression à l'aide d'un moyen (27) d'une quantité qui peut être réglée de manière à compenser l'effet, sur la pression régnant à l'intérieur dudit produit, du relâchement des tensions dans la matière dont est constitué ledit produit et l'effet du changement de propriété dû au fluage, et peut ensuite engendrer un signal si la seconde pression réduite ne se maintient pas sensiblement pendant une période de vérification prédéterminée, et par le fait que la pression intérieure du gaz dans ledit produit est détectée par un moyen (TR2) communiquant avec l'intérieur du produit.

12. Appareil suivant la revendication 11, dans lequel ledit circuit comprend un moyen (T2) grâce auquel on peut modifier ladite période de vérification prédéterminée.

13. Appareil suivant les revendications 11 ou 12, dans lequel ledit moyen pouvant être actionné de manière à appliquer une contrainte d'une façon rigide au produit pour en empêcher un gonflement notable comprend deux plateaux (10) pouvant être déplacés de manière à emprisonner le produit en cours de vérification dans les régions gonflables de ce derner.

14. Appareil suivant la revendication 13, dans lequel chacun desdits plateaux (10) comporte une surface poreuse délimitée par un pluralité de ressorts hélicoïdaux (14) sensiblement rigides dont les axes longitudinaux se trouvent sensiblement dans la surface du substrat du plateau et qui sont contraints de se déformer par rapport à leurs axes longitudinaux.

15. Appareil suivant l'une quelconque des revendications 11 à 14, dans lequel ledit moyen de montage comprend un élément de montage (3A) qui comporte une surface (2) sensiblement annulaire sur laquelle les régions aux environs de ladite ouverture unique du produit peuvent être recouvertes et un moyen (6) capable de coopérer avec ladite surface sensiblement annulaire pour comprimer de façon étanche les régions recouvertes dudit produit de manière à assurer ainsi le montage de façon étanche dudit produit en un point adjacent et aux environs de son ouverture unique, au moins un orifice (4) étant prévu à travers ledit élément de montage, cette ouverture étant susceptible de permettre l'entrée d'un gaz sous pression dans ledit produit et faisant partie dudit moyen communiquant avec l'intérieur d'un produit monté sur le moyen de montage capable d'en détecter la pression.

16. Appareil suivant l'une quelconque des revendications 11 à 15 dans lequel ledit moyen (10) pouvant être actionné de manière appliquer de façon rigide une contrainte au produit et ledit moyen (1, 3A, 6) pour le montage de façon étanche dudit produit sont disposés dans un espace sensiblement clos, cet espace sensiblement clos comportant un moyen (33) qui lui est associé pour en laisser échapper l'air et toute poussière entraînée dans cet air.

17. Appareil suivant l'une quelconque des revendications 11 à 16, comprenant en outre un circuit (TR2, S1) qui, lorsque ladite pression a été atteinte et pour permettre la sortie de l'air de l'intérieur d'un produit, provoque automatiquement et en coopération avec ledit moyen (S1, 27) la réduction de la pression à l'intérieur dudit produit jusqu'à ladite seconde pression, et un circuit (TR1 et TR2) communiquant avec l'intérieur du produit et pouvant détecter la pression dans ce dernier, ce circuit lorsque ladite seconde pression est atteinte signalant si oui ou non ladite seconde pression se maintient pendant une période de temps prédéterminée.

18. Appareil suivant la revendication 17, dans lequel ledit circuit mentionné en dernier (TR1 et TR2) émet un signal lorsque la pression intérieure du gaz, laquelle est légèrement inférieure à ladite seconde pression, dans ledit produit ne diminue pas.

19. Appareil suivant les revendications 17 ou 18, comprenant un moyen (T2) pour permettre à un opérateur de choisir la période de temps durant laquelle ladite seconde pression doit être maintenue avant qu'un signal de non rejet soit donné.

20. Appareil suivant l'une quelconque des revendications 11 à 19, dans lequel un moyen (PR2) est utilisé pour appliquer un gaz à l'intérieur d'un produit avant que ledit moyen (10) ne fonctionne pour appliquer une contrainte de façon rigide audit produit pour en empêcher un gonflage notable.

**Patentansprüche**

1. Verfahren zum Testen eines aufblasbaren Produktes, z.B. eines Operationshandschuhs, auf Leckstellen und wesentliche Schwächungsstellen, mit den folgenden Verfahrensschritten:

(a) Anbringung des Produktes in der Weise, daß es mindestens teilweise durch eine an ihm vorgesehene Öffnung aufgeblasen werden kann, indem ein Gasdruck eingeführt wird,

(b) starres Zusammenhalten des Produktes gegen wesentliches Aufblasen mit Abstützungen, die im Betrieb das Austreten von Gas durch Leckstellen und durch solche Leckstellen, die sich durch den Bruch von im wesentlichen schwachen Stellen des Produktes ergeben, nicht wesentlich behindern,

(c) Anlegen eines Gasdrucks an das Produkt, so daß innerhalb des Produkts ein derartiger Druck entsteht, der in Abwesentheit der Abstützungen das Produkt zerstören würde,

(d) Ermittlung eines etwaigen Abfalls des Gasdrucks in dem Produkt über eine Testperiode, die auf das Anlegen dieses Druckes beginnt,

(e) Zurückweisung des Produktes als fehlerhaft infolge von Leckstellen, wenn das Produkt entweder den Druck nicht entstehen läßt oder über die Testperiode ein nicht akzeptierbarer Druckabfall auftritt,

dadurch gekennzeichnet, daß der folgende zusätzliche Schritt ausgeführt wird:

(f) Verringerung des Druckes in dem Produkt, nachdem dieses den Druck angenommen hat, auf einen zweiten Druck, der seinerseits ein Druck ist, welcher in Abwesenheit der Abstützungen das Produkt zerstören würde, wobei die Größe der Differenz zwischen den Drücken derart ist, daß die Auswirkung der Spannungsrelaxation des Materials, aus dem das Produkt hergestellt ist, und der Änderung der Eigenschaften infolge Kriechens auf den Druck innerhalb des Produktes während der Testperiode mindestens kompensiert wird, so daß nach Durchführung der Druckreduktion jegliche weitere Reduktion des Druckes während der Testperiode, die dann folgt, mit gleichförmigem Maß stattfindet und Gasleckage an Fehlstellen oder erheblichen Schwachstellen in dem Material anzeigt.

2. Verfahren nach Anspruch 1, bei dem einiges Gas dem Produkt zugeführt wird, bevor dieses starr zusammengehalten wird.

3. Verfahren nach Anspruch 1 oder Anspruch 2, bei dem der Gasdruck, der auf den zweiten Druck reduziert wird, im Bereich von etwa 48 bis 55 k Pa liegt.

4. Verfahren nach einem der vorhergehenden Ansprüche, bei dem der zweite Druck etwa 1 k Pa unter dem ersten Druck liegt, auf den das Produkt aufgeblasen wird, während es unter Abstützung steht.

5. Verfahren nach einem der vorhergehenden Ansprüche, bei dem die Testperiode im Bereich von einer Sekunde bis 60 Sekunden liegt.

6. Verfahren nach Anspruch 5, bei dem die Testperiode innerhalb des Bereichs von etwa einer Sekunde bis etwa acht Sekunden ausgewählt wird.

7. Verfahren nach einem der vorhergehenden Ansprüche, welches zum Testen eines Operationshandschuhs gegen Leckstellen angewandt wird, bei dem der Operationshandschuh montiert wird, indem der Stulpenbereich des Handschuhs über ein Teil geschoben wird, das eine im wesentliche ringförmige Fläche hat und eine ringförmige O-Nut aufweist, in der mit einem Wulst versehene Handschuhe derart befestigt werden können, daß sie relativ zu einer anderen im wesentlichen ringförmigen Fläche bewegt werden können, die bei Benutzung Druck auf den mit einem Wulst versehenen Stulpenbereich des über sie gezogenen Handschuhs legt.

8. Verfahren nach Anspruch 7, bei dem mindestens eine der im wesentlichen ringförmigen Flächen einen O-Ring aufweist, der zur Befestigung wulstloser Handschuhe symmetrisch auf ihr montiert ist.

9. Verfahren nach einem der vorhergehenden Ansprüche, das zum Testen eines Operationshandschuhs auf Undichtigkeiten angewandt wird, bei welchem der Handschuh starr abgestützt wird, indem eine Maschine veranlaßt wird, zwei komplementäre abstützende Flächen gegen die aufblasbaren Bereiche des montierten Handschuhs zu bewegen, nachdem der Handschuh mit niedrigem Druck partiell aufgeblasen wurde, wobei jede der zusammenhaltenden Flächen in bezug auf einen montierten Handschuh so angeordnet ist, daß sie einen Seitenbereich eines jeden Fingers einschließlich des Daumens des montierten Handschuhs abstützt.

10. Verfahren nach einem der vorhergehenden Ansprüche, das zum Testen eines Operationshandschuhs gegen Undichtigkeiten angewandt wird, bei dem sämtliche Schritte auf einer Maschine durchgeführt werden, die nach dem Montieren des Handschuhs und dem Beginn der Gasdruckbeaufschlagung automatisch arbeitet und automatisch signalisiert, ob ein bestimmter Handschuh zurückgewiesen werden oder durchgehen soll.

11. Vorrichtung zum Testen eines aufblasbaren Produktes, z.B. eines Operationshandschuhs, das eine einzige vorgesehene Öffnung aufweist, enthaltend:

Mittel zum abgedichteten Montieren des Produktes in der Nähe und über der einzigen vorgesehenen Öffnung des produktes, mit der Fähigkeit Gas unter Druck in das Produkt hineinzuschicken und Gas aus dem Produkt herauszulassen,

Mittel zum starren Abstützen des Produktes gegen wesentliches Aufblasen in aufblasbaren Bereichen des Produktes, wenn dieses an den Befestigungsmitteln montiert ist,

Mittel, die imstande sind, beim Betrieb Gas bis auf einen vorgestimmten Druck über die Befestigungsmittel an ein abgestütztes und montiertes Produkt anzulegen,

Mittel, die imstande sind, den inneren Gasdruck des an den Befestigungsmitteln montierten Produktes zu ermitteln,

Schaltungsmittel, die betriebsmäßig mit den Mitteln zum Anlegen des Gasdruckes verbunden sind und die imstande sind, Signale, daß ein Produkt zurückgewiesen werden soll, an eine Bedienungsperson zu geben, wenn der Druck nicht innerhalb einer vorbestimmten Zeitperiode entstanden ist, und die imstande sind, ein Signal zu erzeugen, wenn der Druck zwar den Wert erreicht hat, aber für eine vorbestimmte Testperiode im wesentlichen nicht eingehalten wird, dadurch gekennzeichnet, daß die Schaltungsmittel (S1), die betriebsmäßig mit den Mitteln zum Anlegen einer vorbestimmten Gasdrucks an ein abgestütztes und montiertes Produkt verbunden sind, imstande sind, den Druck innerhalb des Produktes durch eine Einrichtung (27) um einen voreinstellbaren Betrag zu verringern, wenn dieser Druck einen zweiten Druckwert annimmt, so daß die Auswirkung von Spannungsermüdung des Materials, aus dem das Produkt hergestellt ist, und von Änderungen der Materialeigenschaften infolge Kriechens kompensiert werden, und danach imstande sind, ein Signal zu erzeugen, wenn der reduzierte zweite Druck für eine vorbestimmte Testperiode nicht wesentlich aufrechterhalten wird und daß der innere Gasdruck innerhalb des Produkts von einer mit dem Inneren des Produktes in Verbindung stehenden Einrichtung (TR2) ermittelt wird.

12. Vorrichtung nach Anspruch 11, bei welcher die Schaltungsmittel Mittel (T2) umfassen, durch die die vorbestimmte Testperiode variiert werden kann.

13. Vorrichtung nach Anspruch 11 oder 12, bei welcher die Mittel zum starren Abstützen des Produktes gegen wesentliches Aufblasen zwei Platten (10) aufweisen, die bewegbar sind, um das zu testende Produkt über dessen aufblasbaren Bereichen zu umschließen.

14. Vorrichtung nach Anspruch 13, bei welcher die Platte (10) eine poröse Fläche aufweist, die durch mehrere im wesentlichen starre Schraubenfedern (14) gebildet wird, die mit ihren Längsachsen im wesentlichen in der Fläche des Substrats der Platte liegen und die gegen die Formierung von ihren Längsachsen zusammengehalten werden.

15. Vorrichtung nach einem der Ansprüche 11 bis 14, bei der die Befestigungsmittel ein Befestigungsteil (3A) umfassen, das eine im wesentlichen ringförmige Fläche (2) hat, über deren Bereiche die einzige vorgesehene Öffnung des Produktes übergeschoben werden kann, und eine Einrichtung (6), die imstande ist, mit der im wesentlichen ringförmigen Fläche zusammenzuwirken, um die übergezogenen Bereiche des Produktes abdichtend abzuquetschen und dadurch eine abdichtbare Befestigung des Produktes an und um seine einzige vorgesehene Öffnung zu bewirken, und bei welcher mindestens eine durch das Befestigungsteil hindurchgehende Öffnung (4) vorgesehen ist, die das Einströmen von Gas unter Druck in das Produkt ermöglicht, und einen Teil, der in Verbindung mit dem Innern des auf den Befestigungsmitteln montierten Produktes in Verbindung stehenden Mitteln zur Ermittlung des Druckes bildet.

16. Vorrichtung nach einem der Ansprüche 11 bis 15, bei dem die Mittel (10) zum starren Abstützen des Produktes und die Mittel (1, 3A, 6) zum abdichtenden Montieren des Produktes in einem im wesentlichen umschlossenen Raum montiert sind, an den Mittel (33) zum Absaugen von Luft und in der Luft enthaltenen Staub angeschlossen sind.

17. Vorrichtung nach einem der Ansprüche 11 bis 16, welche zusätzlich Schaltungsmittel (TR2, S1) enthält, die nach dem automatischen Erreichen des Druckes in Verbindung mit den Mitteln (S1, 27) zum Ermöglichen des Auslassens von Luft aus dem Innern eines Produktes die Reduktion des Druckes innerhalb des Produktes auf den zweiten Druck bewirken, und Schaltungsmittel (TR1 und TR2), die mit dem Innern des Produktes in Verbindung stehen und imstande sind, dessen Druck zu ermitteln und welche nach Erreichen des zweiten Druckes angeben, ob der zweite Druck für eine vorbestimmte Zeitspanne aufrechterhalten wird.

18. Vorrichtung nach Anspruch 17, bei der die zuletzt erwähnten Schaltungsmittel (TR1 und TR2) signalisieren, ob das Produkt nicht auf einen inneren Gasdruck fällt, der geringfügig unter dem zweiten Druck liegt.

19. Vorrichtung nach Anspruch 17 oder 18, welches Mittel (T2) enthält, die einer Bedienungsperson ermöglichen, die Zeitdauer, über die der zweite Druck aufrechterhalten werden muß, bevor ein Nicht-Zurückweisungssignal abgegeben wird, einzustellen.

20. Vorrichtung nach einem der Ansprüche 11 bit 19, bei welcher Mittel (TR2) vorgesehen sind um etwas Gas in das Innere des Produktes einzulassen, bevor die Mittel (10) betätigt werden, um das Produkt gegen wesentliches Aufblasen starr abzustützen.

**FIG. 1**

**FIG. 2**

FIG. 3A

FIG. 3B

FIG. 3C

FIG. 3D

FIG. 4

2

# FIG.5

# FIG. 6

FIG.7

**FIG 8**

**FIG 9**

FIG 11

FIG 10

A

A

33

11

32

33

31

30

29

11

10    10

32

21    28    26

0 006 029

7